# EUROPEAN PATENT SPECIFICATION

(11) **EP 1 447 989 B1**
(45) Date of publication and mention of the grant of the patent: **17.05.2006**
(21) Application number: 04100294.0
(22) Date of filing: 28.01.2004
(51) Int. Cl.: H04N 7/24, H04N 5/00

(54) **Method for initializing a digital decoder and decoder implementing such a method**
Methode zur Initialisierung eines digitalen Dekoders und Dekoder der diese Methode implementiert
Procede d'initialisation d'un decodeur numerique et decodeur mettant en oeuvre un tel procede

(30) Priority: 17.02.2003 FR 0301862
(43) Date of publication of application: 18.08.2004
(73) Proprietor: Thomson Licensing, 92100 Boulogne-Billancourt (FR)
(72) Inventor: Quere, Thierry, 35160, Monfort sur Meu (FR); Fraleu, Sébastien, 35530, Noyal sur Vilaine (FR); Magras, André, 35760, St Gregoire (FR)
(74) Representative: Berthier, Karine

(56) References cited:
- EP-A- 0 905 985
- WO-A-00/72581

## Description

### Field of the invention

The invention relates to a method for initializing a digital decoder comprising a tuner capable of receiving, in succession, data on several frequencies, each frequency being able to carry a data transport stream containing forthcoming events tables transmitted by service providers. It also relates to a decoder implementing such a method.

### State of the art

The invention is more particularly concerned with a multipurpose digital decoder intended to be sold without subscription by a particular operator and capable of receiving audiovisual services or channels transmitted by satellite, by cable or by the so-called digital terrestrial route.

An operator generally transmits a bouquet of services, that is to say a collection of audiovisual channels or of other services transmitted via satellite, cable or over the airwaves (also referred to as the digital terrestrial route). The users can access these services by way of a decoder linked to a television and to an appropriate antenna or to an appropriate connection to the cable.

A significant quantity of services is now broadcast free according to the DVB standard (ETSI EN 300 468, *"Digital Video Broadcasting (DVB); Specification for Service Information (SI) in DVB systems"*), so that a multipurpose decoder without subscription is capable of accessing these services, which are typically free audiovisual channels. This type of decoder can also be used to access pay-TV service bouquets. The user of the decoder must in this case have taken out a fee-paying subscription with the service provider.

The transmission of a service bouquet exploits several base frequencies. A frequency can carry about ten MPEG audio/video streams together with other digital data such as so-called Event Information Tables or EITs, defined in the aforesaid DVB standard. These EIT tables contain information about events or programs that will be transmitted on a particular service (start time, duration, descriptor of the event, etc) and are transmitted by being repeated with a certain periodicity in the audio/video data transport stream.

According to the aforesaid DVB standard, EIT tables are of two types:
- "present/following" tables that contain information relating to the event currently being transmitted on a specified service or to the event immediately following the latter;
- "event schedule" tables that contain information about forthcoming events over a duration of from one to several days for a given service. These tables are called "forthcoming events tables" in the subsequent description and are denoted EITS (standing for "EIT Schedule").

The forthcoming events tables EITS are optional and are not necessarily transmitted by the service providers. When they are present, they are used by the digital decoders to generate program grids that can be displayed in a program guide (often denoted EPG standing for "Electronic Program Guide") on the screen of a television connected to the decoder so as to give the details of the events (such as films or transmissions) timetabled for the forthcoming days on the audiovisual channels that can be received by the decoder.

The forthcoming events tables EITS may be transmitted in several possible ways by the operators. Some EITS tables may be transmitted on the same transport stream TS as the services to which they refer. In this case one speaks of an "EIT Schedule - Actual TS" in the aforesaid DVB standard. In the subsequent description we shall call them "EITS Actual".

In addition, some EITS tables may be transmitted on one transport stream TS that contain information relating to services transmitted on different TS streams. In this case one speaks of "EIT Schedule - Other TS" in the aforesaid DVB standard. In the subsequent description we shall call them "EITS Other".

A provider can choose not to transmit any EITS table (since this is not compulsory in the DVB standard). He may also transmit EITS Actual tables, for each TS stream in which he broadcasts services, or else only for certain TS streams in which he broadcasts services, for example those that transport audio/video data for cinema channels or sports channels for which the viewers wish to know the programs in advance.

The provider can also transmit EITS Other tables on a specific TS stream, the EITS Other tables in this case comprising information about services broadcast by the provider on other TS streams.

A problem then arises when one wishes to retrieve the information contained in these EITS tables so as to generate program grids. Specifically, the strategies of each provider being different, one never knows whether EITSs are or are not transmitted and whether they are EITS Actual or Other.

To consult a program grid, the user manipulates a remote control in order to activate a program guide envisaged in the decoder. He navigates around various menus by using his remote control to select the program grid that he wishes to have displayed, this grid being definable by a particular service (for example a channel number) and by data to be displayed (in particular a specified period of the day for which the user wishes to see the programs). To display the requested program grid, the decoder must retrieve the EITS tables transmitted by the provider of the service.

Since the decoder does not know whether EITS tables are transmitted and in which form (EITS Actual or Other), the strategy adopted generally consists in the decoder driving the tuner so that it locks onto the frequency on which the service corresponding to the requested program grid is transmitted so as to search for the EITS Actual tables comprising information representative of a program grid requested by the user. In practice, the tuner locks onto a particular transponder transmitting, on a given frequency, the TS stream containing the audio/video data of the requested service. The data received on this frequency are analyzed until the decoder identifies EITS tables. If no EITS Actual table is transmitted for the requested service, this being the case for roughly half the free audiovisual channels for example, the decoder must analyze the data received over at least 10 seconds (corresponding to the rate of repetition of the EITS tables in the TS stream) before being able to inform the user that he cannot display information with regard to the requested program grid. If the user requests information about several services at the same time, the waiting time may thus be multiplied. Under these conditions, consultation of the program grids is not at all attractive for users.

### Summary of the invention

The invention remedies the drawbacks of the prior art by proposing a method for initializing a digital decoder comprising a tuner capable of receiving, in succession, data on several frequencies, each frequency being able to carry a data transport stream containing forthcoming events tables transmitted by service providers. The method comprises the steps consisting in analyzing in succession the data received on each transport stream so as to detect the presence of forthcoming events tables and recording in a memory of the decoder a list of identifiers of the service providers transmitting forthcoming events tables.

The method can furthermore comprise a step consisting in recording in the memory of the decoder, for each service provider that transmits forthcoming events tables, a list of identifiers of transport streams on which said tables are transmitted.

The method can also comprise a step consisting in recording in the memory of the decoder an information item specifying for each transport stream whose identifier is stored in the list:
- whet her at least one forthcoming events table transmitted on the transport stream makes reference to a service transmitted on the same transport stream; and/or
- whether at least one forthcoming events table transmitted on the transport stream makes reference to a service transmitted on another transport stream.

According to a particular characteristic of the invention, the analysis time for the data received on a transport stream is a predetermined duration that is less than the period of repetition of the forthcoming events tables in the transport stream.

The initialization may be triggered automatically during the installation of the decoder, but it may also be triggered after this installation so as to perform an update. Advantageously, this installation is triggered on receipt by the decoder of an initialization signal, in such a way as to be transparent to the user. Initialization may also be triggered manually by the user.

The invention also relates to a digital decoder comprising a tuner capable of receiving, in succession, data on several frequencies, each frequency being able to carry a data transport stream containing forthcoming events tables transmitted by service providers. The decoder also comprises a central processing unit including programmable means and linked to the tuner and suitable for driving it. The central processing unit is suitable for initializing the decoder by being programmed to analyze the data received on each transport stream so as to identify the presence of forthcoming events tables, and so as to record in a memory of the decoder a list of identifiers of service providers transmitting forthcoming events tables.

The central processing unit can furthermore be adapted for recording in the memory of the decoder, for each service provider that transmits forthcoming events tables, a list of identifiers of transport streams on which said tables are transmitted.

The central processing unit can furthermore be adapted for recording in the memory of the decoder, an information item specifying for each transport stream whose identifier is stored in the list of identifiers:
whether at least one forthcoming events table transmitted on said transport stream makes reference to a service transmitted on the same transport stream, said table then being of the "actual" type and/or
whether at least one forthcoming events table transmitted on said transport stream makes reference to a service transmitted on another transport stream, said table then being of the "other" type.

According to a particular characteristic of the invention, the decoder furthermore comprises means for generating a program guide on the basis of information contained in forthcoming events tables transmitted by the service providers. These means are adapted for presenting with a particular tag the services of providers whose identifier is not included in the list of identifiers.

In order to present the forthcoming events of a given service of a provider whose identifier is included in the list of identifiers of providers, the program guide generation means are advantageously adapted for verifying in the list of identifiers of transport streams that transmit forthcoming events tables in respect of this provider whether at least one transport stream comprises an information item specifying that the transport stream transmits forthcoming events tables of "other" type. In case of positive verification, the program guide generation means acquire the forthcoming events tables containing the information relating to this service by driving the tuner so that it locks onto a frequency corresponding to this transport stream that transmits forthcoming events tables of "other" type. In case of negative verification, the program guide generation means acquire the forthcoming events tables containing the information relating to this service by driving the tuner so that it locks onto a frequency corresponding to the transport stream that transmits the service.

### Brief description of the drawings

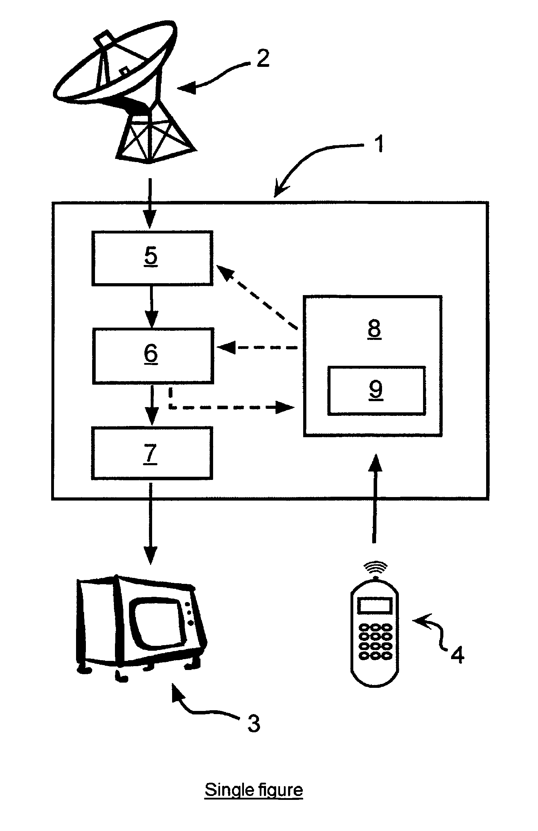

The invention will now be described in greater detail, and with reference to the appended drawing.

The single figure is a highly diagrammatic representation of a digital decoder connected to a receiving antenna and to a television set.

### Detailed description of an embodiment of the invention

The invention concerns a method for initializing a multipurpose digital decoder 1, represented in the single figure in the form of a block diagram, intended to be connected between a receiving antenna 2 and a television set 3, so as to access services, in particular audiovisual channels, broadcast by a service provider. The antenna 2 represented is a satellite reception antenna but it may also be an RF (or terrestrial) reception antenna. The connection to the antenna 2 may also be replaced by a connection to the cable.

This decoder 1 may be sold in the form of a separate box, but it may also be integrated into a digital television. This type of decoder may be controlled by the user with a remote control 4, so as to select an audiovisual channel to be displayed, or else to display a program guide. It comprises a tuner 5 capable of receiving data transmitted on various frequencies. This tuner 5 is linked upstream to the reception antenna 2 and downstream to a demultiplexer 6 which is itself linked downstream to a decoding unit 7 capable of converting an MPEG data stream corresponding to an audiovisual channel into a video signal utilizable by the television 3.

As represented by dashed arrows in the figure, a central processing unit 8 comprising programmable means, which unit is also called a monitoring task, is linked to the tuner 5 and to the demultiplexer 6. The monitoring task drives the tuner 5 so that it locks onto a predetermined frequency, and it drives the demultiplexer 6 so that it extracts from the digital data originating from the tuner 5 the audio/video data corresponding to the audiovisual channel that the user wishes to display.

The digital data transmitted on a given frequency in a transport stream TS generally comprise the audio/video data of several audiovisual services or channels and possibly forthcoming events tables EITS, each comprising information about events or programs that will be transmitted on a given service. These EITS tables are transmitted by being repeated every 10 seconds maximum (in the case of tables containing information about the events of the next week) or 30 seconds maximum (in the case of tables containing information about events on days after the next week) according to the aforesaid DVB standard.

All the data transmitted in a TS transport stream on a given frequency originate from a single provider, and the collection of services of one and the same provider is generally transmitted in several TS transport streams on several different frequencies. As we have seen earlier, when forthcoming events tables EITS are transmitted in a TS stream on a given frequency, these tables may contain information relating to a service transmitted in the same TS stream (EITS Actual tables) or else information relating to a service transmitted on another TS stream (EITS Other tables). Not all providers necessarily transmit forthcoming events tables, and for roughly half of the free audiovisual channels, no EITS table is transmitted.

During the first commissioning of such a decoder, an installation procedure is triggered. During this installation, the tuner 5 is driven by the monitoring task 8 so as to progressively scan the frequencies that it can receive, and when it receives data on a frequency, the demultiplexer 6 is programmed by the monitoring task 8 so as to extract from the data received on this frequency information from a services description table called SDT in the aforesaid DVB standard (standing for "Service Description Table"). This SDT table is divided into sections which each contain an identifier of the provider transmitting on a given frequency as well as the identifiers of the various services transmitted on this frequency in a transport stream TS.

At the end of installation, a list of all the services that can be received in the decoder is recorded in the memory 9 so as to form a database intended to be utilized, inter alia, by the program guide of the decoder. This installation takes roughly two seconds for each transmission frequency, and the service identifiers stored are thereafter utilized by the program guide to present the user with a list of the available audiovisual channels.

According to the invention, the presence of forthcoming events tables EITS comprising information about the programs that will be transmitted by various services is detected during the execution of a process for initializing the decoder that is driven by the monitoring task 8 and that is performed preferentially during the phase of installation of the decoder. For each EITS table detected, information is extracted from the table so as to construct a list of the providers that transmit EITS tables, detailing for each provider, the various transport streams TS in which EITS tables have been detected. This list is recorded in the memory 9 of the decoder which is a non-volatile memory.

This list is advantageously utilized by the program guide to alert the user to the services of providers that do not transmit any information about their programs (those for which no EITS table has been detected during the initialization process) and those which do transmit such information, in correspondence with the services that have been detected during installation. In this way, when the user activates the program guide he has direct knowledge of those audiovisual channels (that is to say those services) for which no information about the programs is available. In the case where the user wishes to consult a program grid in respect of a service of a provider that does not transmit EITS tables, this saves the decoder triggering an EITS table search procedure that is bound to fail.

The identification of the presence of EITS tables is advantageously carried out by analyzing the data received at the level of the demultiplexer 6 that comprises an audio/video output and an output reserved for digital data such as the EITS tables. More particularly, filters are implemented in the demultiplexer 6 so as to extract from the stream of data received the data packets containing the EITS tables and so as to send these data to the monitoring task 8.

Within the framework of the aforesaid DVB standard, the services transmitted are identified uniquely by a DVB triplet. The DVB triplet comprises an identifier of the provider of the service "*original_network_id*", an identifier of the TS transport stream on which the service is transmitted (which also corresponds to a specified transmission frequency) "*transport_stream_id*", and an identifier of the service *"service_id".* The DVB triplet is contained in each forthcoming events table EITS for a given service. To construct the list of providers transmitting EITS tables, it is therefore sufficient to extract from each EITS table detected, the "*original_network_id*" data item appearing in the DVB triplet contained in the EITS table as well as the *"transport_stream_id"* data item for storing the TS streams in which EITS tables have been detected.

Advantageously, an information item specifying for each EITS table detected whether it makes reference to a service transmitted on the same frequency - and therefore on the same TS stream - (EITS Actual table) or to a service transmitted on another frequency (EITS Other table) is also detected in such a way as furthermore to store in the list recorded in the memory 9 of the decoder a Boolean indicator indicating, for each TS stream in which EITS tables have been detected, whether EITS Actual tables are present and/or whether EITS Other tables are present. This information item is used by the program guide during acquisition of the data as we shall see later.

The analysis of the data received on all the frequencies that the decoder can receive may prove to be rather lengthy if one takes into account, for each frequency, the repetition period of the EITS tables that may be as much as 30 seconds, or even 60 seconds in certain particular cases of digital terrestrial transmission. That is to say that if one waits 30 seconds on each frequency before deciding that there are no EITS tables transmitted, the initialization process may take a relatively long time given that the number of reception frequencies in a decoder may be as high as eighty.

In a preferred mode of implementation of the method, the analysis of the data received on a frequency is limited to a predetermined duration that is less than the repetition period of the EITS tables. This duration may for example be equal to two seconds, thereby reducing the initialization time while making it possible to compile a list of the providers for which EITS tables have been detected. More particularly, if no EITS table is detected after two seconds, then it will be considered that no EITS table is being transmitted on the analyzed frequency. Conversely, when EITS tables are detected on the analyzed frequency, the identification of one of them is carried out in two seconds maximum and any other EITS tables that may be transmitted on this frequency originate from the same provider. The detection of a single EITS table on a frequency is therefore sufficient to conclude that EITS tables are likely to be available for all the services transmitted by the provider whose "*original_network_id*" identifier is contained in this EITS table.

The initialization process just described may advantageously be synchronized with the installation of the decoder. Specifically, during the installation phase that is carried out upon first commissioning, the tuner scans the range of frequencies that it can receive, and when it receives data on a frequency, it is programmed to identify and record various parameters of the services present on this frequency. This installation takes roughly two seconds for each transmission frequency, and it may advantageously include the detection of forthcoming events tables and the recording in the memory 9 of data relating to these EITS tables. In this way, the execution of the initialization process is integrated into the installation of the decoder so that it is transparent to the user.

The initialization process may also be carried out after the first commissioning with a view to updating the list recorded in the memory 9 which is liable to evolve over time. In this case, the initialization process may for example be triggered by the user by actuating a suitable control. In another mode of implementation, this initialization is triggered remotely by using a transmission frequency that is reserved for updates of the programs implemented in the decoder. During the design of a decoder a frequency band is generally reserved for performing remote updates of the decoder. These updates are then driven by the digital data received on a predetermined frequency, so that they are transparent to the user who need not concern himself with the parameter settings of his hardware. The decoder according to the invention can advantageously be programmed to trigger an initialization when it receives an initialization signal. These signals may be transmitted by the service operator when significant changes occur in distribution, in particular when new forthcoming events tables are available.

When the user runs the program guide of his decoder, the latter firstly verifies in the list stored during the initialization process, those services for which EITS tables have been detected. Thus, during the displaying of the program guide, the channels (or services) for which no EITS table has been detected, appear with an individual tag (in particular, a special logo, a particular color, a gray zone against the name of the channel, etc) so as to signal to the user that no information about this channel's forthcoming events is available. Thus, the user will not request information about the programs of this channel and will not wait unnecessarily for the decoder to attempt to find EITS tables for this channel for at least 10 seconds.

When the user requests for example the displaying of the grid of programs of several channels (or services) for a particular timeslot, the decoder must firstly acquire the EITS tables corresponding to these channels. To do this, the decoder adopts the following strategy: it searches through the list of providers transmitting EITS tables (the list stored in its memory 9 during the initialization process) for whether EITS Other tables are transmitted by the providers of the channels requested by the user, and if so, on which transport stream TS these tables are transmitted. If such is the case, the decoder will lock on firstly to the transponder transmitting, at a given frequency, the TS stream containing EITS Other tables, that is to say information about forthcoming events of channels transmitted on other frequencies.

The reason for this is that when EITS Other tables are detected on a frequency, this generally signifies that all the forthcoming events tables of the channels transmitted by this provider are transmitted on this frequency, which is also called a barker-channel. During the search for EITS tables, the favoring of the barker-channel frequency makes it possible to retrieve within a relatively short time the information about the program grids of all the channels transmitted by this provider.

More particularly, the entire collection of forthcoming events tables transmitted in EITS Other form on the barker-channel frequency may be retrieved within a duration of between ten and thirty seconds depending on the rate of repetition of the tables. Retrieving these forthcoming events tables on various frequencies in EITS Actual form would lead to a duration equivalent to ten to thirty seconds, multiplied by the number of frequencies on which the EITS tables are transmitted. Thus, the favoring of the barker-channel frequency makes it possible to significantly reduce the duration of acquisition of the forthcoming events tables and hence to improve the overall performance of the decoder's program guide.

## Claims

1. Method for initializing a digital decoder (1) comprising a tuner (5) capable of receiving, in succession, data on several frequencies, each frequency being able to carry a data transport stream containing forthcoming events tables transmitted by service providers, **characterized in that** it comprises the steps consisting
in analyzing in succession the data received on each transport stream so as to detect the presence of forthcoming events tables and
recording in a memory (9) of the decoder (1) a list of identifiers of the service providers transmitting forthcoming events tables.

2. Method according to Claim 1, furthermore comprising a step consisting in recording in the memory (9) of the decoder (1), for each service provider that transmits forthcoming events tables, a list of identifiers of transport streams on which said tables are transmitted.

3. Method according to Claim 2, furthermore comprising a step consisting in recording in the memory (9) of the decoder (1) an information item specifying for each transport stream whose identifier is stored in said list:
whether at least one forthcoming events table transmitted on said transport stream makes reference to a service transmitted on the same transport stream; and/or
whether at least one forthcoming events table transmitted on said transport stream makes reference to a service transmitted on another transport stream.

4. Method according to one of Claims 1 to 3, in which the analysis time for the data received on a transport stream is a predetermined duration that is less than the period of repetition of said forthcoming events tables in said transport stream.

5. Method according to one of Claims 1 to 4, in which the initialization is triggered automatically during the installation of the decoder (1).

6. Method according to one of Claims 1 to 5, in which the initialization is triggered automatically on receipt by the decoder of an initialization signal.

7. Method according to one of Claims 1 to 6, in which the initialization is triggered manually by the user.

8. Digital decoder (1) comprising a tuner (5) capable of receiving, in succession, data on several frequencies, each frequency being able to carry a data transport stream containing forthcoming events tables transmitted by service providers, a central processing unit (8) including programmable means and linked to the tuner (5) and suitable for driving it, **characterized in that** the central processing unit (8) is suitable for initializing the decoder by being programmed to analyze the data received on each transport stream so as to identify the presence of forthcoming events tables, and so as to record in a memory (9) of the decoder (1) a list of identifiers of service providers transmitting forthcoming events tables.

9. Decoder according to Claim 8, **characterized in that** the central processing unit (8) is furthermore adapted for recording in the memory (9) of the decoder (1), for each service provider that transmits forthcoming events tables, a list of identifiers of transport streams on which the said tables are transmitted.

10. Decoder according to Claim 9, **characterized in that** the central processing unit (8) is furthermore adapted for recording in the memory (9) of the decoder (1), an information item specifying for each transport stream whose identifier is stored in said list:
whether at least one forthcoming events table transmitted on said transport stream makes reference to a service transmitted on the same transport stream, said table then being of the "actual" type and/or
whether at least one forthcoming events table transmitted on said transport stream makes reference to a service transmitted on another transport stream, the said table then being of the "other" type.

11. Decoder according to one of Claims 8 to 10, furthermore comprising means for generating a program guide on the basis of information contained in forthcoming events tables transmitted by the service providers, **characterized in that** the said means are adapted for presenting with a particular tag the services of providers whose identifier is not included in said list of identifiers.

12. Decoder according to Claim 11, taken in its dependence on Claim 10, **characterized in that** said program guide generation means are furthermore adapted, in order to present the forthcoming events of a given service of a provider whose identifier is included in said list of identifiers of providers:
for verifying in said list of identifiers of transport streams that transmit forthcoming events tables in respect of said provider whether at least one transport stream comprises an information item specifying that the said transport stream transmits forthcoming events tables of "other" type and,
- in case of positive verification:
in acquiring the forthcoming events tables containing the information relating to this service by driving the tuner (5) so that it locks onto a frequency corresponding to said transport stream that transmits forthcoming events tables of "other" type; or
- in case of negative verification:
in acquiring the forthcoming events tables containing the information relating to this service by driving the tuner (5) so that it locks onto a frequency corresponding to the transport stream that transmits the said service.

## Patentansprüche

1. Verfahren zur Initialisierung eines digitalen Dekoders (1), der einen Tuner (5) beinhaltet und geeignet ist, nacheinander Daten auf verschiedenen Frequenzen zu empfangen, wobei jede Frequenz geeignet ist, einen Datentransportstrom zu übertragen, der Tabellen für bevorstehende Zeitereignisse enthält, die von Dienstanbietern übertragen werden
**dadurch gekennzeichnet, dass**
es Schritte enthält, bestehend aus der
Analyse der aufeinander folgenden Daten, die auf jedem Transportstrom empfangen werden, um so das Vorhandensein von Tabellen für bevorstehende Zeitereignisse zu erkennen und der
Aufnahme in einen Speicher (9) des Dekoders (1) einer Liste von Kennungen der Dienstanbieter, die Tabellen für bevorstehende Zeitereignisse übertragen.

2. Verfahren nach Anspruch 1, das ferner einen Schritt enthält, der darin besteht, in einen Speicher (9) des Dekoders (1) für jeden Dienstanbieter, der Tabellen für bevorstehende Zeitereignisse überträgt, eine Liste von Kennungen von Transportströmen zu speichern, in denen die Tabellen übertragen werden.

3. Verfahren nach Anspruch 2, das ferner einen Schritt enthält, der darin besteht in den Speicher (9) des Dekoders (1) ein Datenwort abzulegen, das für jeden Transportstrom, dessen Kennung in der Liste gespeichert ist, festlegt:
ob zumindest eine Tabelle für bevorstehende Zeitereignisse, die auf dem Transportstrom übertragen wird, sich auf einen Dienst bezieht, der auf demselben Transportstrom übertragen wird; und / oder
ob zumindest eine Tabelle für bevorstehende Zeitereignisse, die auf dem Transportstrom übertragen wird, sich auf einen Dienst bezieht, der auf einem anderen Transportstrom übertragen wird.

4. Verfahren nach den Ansprüchen 1 bis 3, in dem die Auswertungszeit für die auf einem Transportstrom empfangenen Daten eine vorbestimmte Zeitdauer ist, die kleiner ist als die Wiederholperiode der Tabelle für bevorstehende Zeitereignisse in diesem Transportstrom.

5. Verfahren nach den Ansprüchen 1 bis 4, in dem die Initialisierung automatisch während der Einrichtung des Dekoders (1) ausgelöst wird.

6. Verfahren nach den Ansprüchen 1 bis 5, in dem die Initialisierung automatisch nach Erhalt eines Initialisierungssignals durch den Dekoder ausgelöst wird.

7. Verfahren nach den Ansprüchen 1 bis 6, in dem die Initialisierung manuell vom Benutzer ausgelöst wird.

8. Digitaldekoder (1), der einen Tuner (5) beinhaltet, der geeignet ist nacheinander Daten auf mehreren Frequenzen zu empfangen, wobei jede Frequenz in der Lage ist einen Datentransportstrom zu übertragen, der Tabellen für bevorstehende Zeitereignisse von Dienstanbietern enthält, eine zentrale Verarbeitungseinheit (8), die Programmiermittel beinhaltet und mit dem Tuner (5) verbunden ist und ihn ansteuern kann
**dadurch gekennzeichnet, dass**
die zentrale Verarbeitungseinheit (8) zur Initialisierung des Dekoders geeignet ist, der programmiert ist, um die empfangenen Daten auf jedem Transportstrom zu analysieren, um damit das Vorhandensein von Tabellen für bevorstehende Zeitereignisse zu identifizieren und um in einem Speicher (9) des Dekoders (1) eine Liste mit Kennungen der Dienstanbieter, die Tabellen für bevorstehende Zeitereignisse übertragen, zu speichern.

9. Dekoder mach Anspruch 8
**dadurch gekennzeichnet, dass**
die zentrale Verarbeitungseinheit (8) ferner geeignet ist, in den Speicher (9) des Dekoders (1) für jeden Dienstanbieter, der Tabellen für bevorstehende Zeitereignisse übertragt, eine Liste der Kennungen der Transportströme, auf denen die Tabellen übertragen werden, aufzunehmen.

10. Dekoder nach Anspruch 9
**dadurch gekennzeichnet, dass**
die zentrale Verarbeitungseinheit (8) ferner geeignet ist, um in den Speicher (9) des Dekoders (1) ein Datenwort aufzunehmen, das für jeden Transportstrom spezifiziert, wessen Kennung in der Liste gespeichert ist:
ob zumindest eine Tabelle für bevorstehende Zeitereignisse, die auf dem Transportstrom übertragen wird sich auf einen übertragenen Dienst auf demselben Transportstrom bezieht, wobei dann die Tabelle "aktueller" Art ist und / oder
ob zumindest eine Tabelle für bevorstehende Zeitereignisse auf diesem Transportstrom sich auf einen übertragenen Dienst auf einem anderen Transportstrom bezieht, wobei dann die Tabelle "anderer" Art ist.

11. Dekoder nach den Ansprüchen 8 bis 10, der ferner Mittel zur Erzeugung eines Programmführers auf der Grundlage von Informationen beinhaltet, die in den Tabellen für bevorstehende Zeitereignisse enthalten sind, die durch Dienstanbieter übertragen wurden
**dadurch gekennzeichnet, dass**
die Mittel geeignet sind die Dienste von Anbietern mit einer besonderen Kennzeichnung darzustellen, deren Kennung nicht in der Liste der Kennungen enthalten ist.

12. Dekoder nach Anspruch 11, in Anlehnung an den Anspruch 10
**dadurch gekennzeichnet, dass**
die Mittel zur Erzeugung des Programmführers ferner geeignet sind, um bevorstehende Ereignisse eines gegebenen Dienstes eines Anbieters anzuzeigen, dessen Kennung in der Liste der Kennungen der Dienstanbieter enthalten ist:
zur Überprüfung in der Liste der Kennungen der Transportströme, die Tabellen für bevorstehende Zeitereignisse in Bezug auf den Anbieter übertragen, ob zumindest ein Transportstrom ein Datenwort enthält, welches spezifiziert, dass der Transportstrom Tabellen für bevorstehende Zeitereignisse der "anderen" Art enthält und
- im Fall einer positiven Prüfung:
zur Erlangung der Tabellen für bevorstehende Zeitereignisse, die die Informationen in Bezug auf die Dienste enthalten, durch Ansteuern des Tuners (5), so dass er sich auf eine Frequenz einstellt, die dem Transportstrom, der Tabellen für bevorstehende Zeitereignisse der "anderen" Art überträgt, entspricht; oder
- im Falle eine negativen Überprüfung:
zur Erlangung der Tabellen für bevorstehende Zeitereignisse, die die Informationen in Bezug auf die Dienste enthalten, durch Ansteuern des Tuners (5), so dass er sich auf eine Frequenz einstellt, die dem Transportstrom, der Tabellen für bevorstehende Zeitereignisse überträgt, entspricht.

## Revendications

1. Procédé d'initialisation d'un décodeur numérique (1) comprenant un tuner (5) capable de recevoir, successivement, des données sur plusieurs fréquences, chaque fréquence étant susceptible de porter un flux de transport de données contenant des tables d'événements à venir diffusées par des fournisseurs de services, **caractérisé en ce qu'**il comprend les étapes consistant à analyser successivement les données reçues sur chaque flux de transport pour détecter la présence de tables d'événements à venir et
à enregistrer dans une mémoire (9) du décodeur (1) une liste d'identifiants des fournisseurs de services diffusant des tables d'événements à venir.

2. Procédé selon la revendication 1, comportant en outre une étape consistant à enregistrer dans la mémoire (9) du décodeur (1), pour chaque fournisseur de services qui diffuse des tables d'événements à venir, une liste d'identifiants de flux de transport sur lesquels sont diffusés lesdites tables.

3. Procédé selon la revendication 2, comportant en outre une étape consistant à enregistrer dans la mémoire (9) du décodeur (1) une information précisant pour chaque flux de transport dont l'identifiant est mémorisé dans ladite liste :
si au moins une table d'événements à venir diffusée sur ledit flux de transport fait référence à un service diffusé sur le même flux de transport ; et/ou
si au moins une table d'événements à venir diffusée sur ledit flux de transport fait référence à un service diffusé sur un autre flux de transport.

4. Procédé selon l'une des revendications 1 à 3, dans lequel le temps d'analyse des données reçues sur un flux de transport est une durée prédéterminée inférieure à la période de répétition desdites tables d'événements à venir dans ledit flux de transport.

5. Procédé selon l'une des revendications 1 à 4, dans lequel l'initialisation est déclenchée automatiquement durant l'installation du décodeur (1).

6. Procédé selon l'une des revendications 1 à 5, dans lequel l'initialisation est déclenchée automatiquement sur réception par le décodeur d'un signal d'initialisation.

7. Procédé selon l'une des revendications 1 à 6, dans lequel l'initialisation est déclenchée manuellement par l'utilisateur.

8. Décodeur numérique (1) comprenant un tuner (5) capable de recevoir, successivement, des données sur plusieurs fréquences, chaque fréquence étant susceptible de porter un flux de transport de données contenant des tables d'événements à venir diffusées par des fournisseurs de services, une unité centrale (8) incluant des moyens programmables reliée au tuner (5) et apte à le piloter, **caractérisé en ce que** l'unité centrale (8) est apte à initialiser le décodeur en étant programmée pour analyser les données reçues sur chaque flux de transport afin d'identifier la présence de tables d'événements à venir, et pour enregistrer dans une mémoire (9) du décodeur (1) une liste d'identifiants des fournisseurs de services diffusant des tables d'événements à venir.

9. Décodeur selon la revendication 8, **caractérisé en ce que** l'unité centrale (8) est en outre adaptée à enregistrer dans la mémoire (9) du décodeur (1), pour chaque fournisseur de services qui diffuse des tables d'événements à venir, une liste d'identifiants de flux de transport sur lesquels sont diffusés lesdites tables.

10. Décodeur selon la revendication 9, **caractérisé en ce que** l'unité centrale (8) est en outre adaptée à enregistrer dans la mémoire non volatile (9) du décodeur (1), une information précisant pour chaque flux de transport dont l'identifiant est mémorisé dans ladite liste :
si au moins une table d'événements à venir diffusée sur ledit flux de transport fait référence à un service diffusé sur le même flux de transport, ladite table étant alors du type « actuel » et/ou
si au moins une table d'événements à venir diffusée sur ledit flux de transport fait référence à un service diffusé sur un autre flux de transport, ladite table étant alors du type « autre ».

11. Décodeur selon l'une des revendications 8 à 10, comprenant en outre des moyens pour générer un guide de programmes à partir d'informations contenues dans des tables d'événements à venir diffusées par les fournisseurs de services, **caractérisé en ce que** lesdits moyens sont adaptés à présenter avec une signalétique particulière les services des fournisseurs dont l'identifiant n'est pas inclus dans ladite liste d'identifiants.

12. Décodeur selon la revendication 11, prise dans sa dépendance de la revendication 10, **caractérisé en ce que** lesdits moyens de génération de guide de programme sont en outre adaptés, pour présenter les événements à venir d'un service donné d'un fournisseur dont l'identifiant est inclus dans ladite liste d'identifiants de fournisseurs :
à vérifier dans ladite liste d'identifiants de flux de transport qui diffusent des tables d'événements à venir pour ledit fournisseur si au moins un flux de transport comporte une information précisant que ledit flux de transport diffuse des tables d'événements à venir de type « autre » et,
- en cas de vérification positive :
à acquérir les tables d'événements à venir contenant les informations relatives à ce service en pilotant le tuner (5) pour qu'il se cale sur une fréquence correspondant audit flux de transport qui diffuse des tables d'événements à venir de type « autre » ; ou
- en cas de vérification négative :
à acquérir les tables d'événements à venir contenant les informations relatives à ce service en pilotant le tuner (5) pour qu'il se cale sur une fréquence correspondant au flux de transport qui diffuse ledit service.
